# EUROPEAN PATENT SPECIFICATION

(11) **EP 1 994 820 B1**
(45) Date of publication and mention of the grant of the patent: **11.07.2012**
(21) Application number: 08009233.1
(22) Date of filing: 20.05.2008
(51) Int. Cl.: A01K 1/00

(54) **Improvement in and relating to animal stalls**
Verbesserung an und in Zusammenhang mit Tierställen
Amélioration dans les stalles pour animaux et se rapportant à celles-ci

(30) Priority: 23.05.2007 GB 0709881
(43) Date of publication of application: 26.11.2008
(73) Proprietor: Gildernew, Sean, Dungannon BT70 1LQ (IE)
(72) Inventor: Gildernew, Sean, Dungannon BT70 1LQ (IE)
(74) Representative: Waller, Stephen

(56) References cited:
- DE-A1- 3 700 860
- DE-B- 1 173 718
- DE-U1- 29 802 110
- FR-A- 2 804 150
- GB-A- 2 324 700
- US-A- 1 423 241

## Description

The present invention relates to animal stalls. The invention relates particularly to cow stalls or cow cubicles.

In a cattle house, it is common to provide a plurality of cow stalls, commonly known as cow cubicles. Cow cubicles typically include a concrete base from which one or more barriers project. The barriers, which tend to be made of metal, tend to suffer from erosion as a result of being exposed to cow effluent. Conventionally, the barriers are permanently embedded in the concrete base and it can be expensive and time consuming to replace an eroded barrier.

UK Patent GB 2 392 366 (Gildernew) addresses this problem by providing barriers which are readily removable from the concrete base. DE 3700860 and DE 29802110 disclose known animal stall barriers.

It would be desirable to provide an alternative to the animal stall disclosed in GB 2 392 366.

Accordingly, a first aspect of the invention provides an animal stall apparatus as claimed in claim 1.

Preferably, said foot portion is adapted for engagement with said obverse face when the barrier is mounted on the base.

Preferably, said foot portion comprises a collar or plate.

Optionally, said foot portion is fixed to said leg portion. Alternatively, the foot portion includes an aperture, or is otherwise adapted for enabling said leg portion to pass through said foot portion.

In a preferred embodiment, said foot portion includes at least one aperture for receiving said at least one fixing device.

In such embodiments, the foot portion is typically spaced apart from the free end of said at least one leg portion, advantageously by a distance approximately equal to the thickness of said base.

Advantageously, the or each first channel formed in the base comprises a respective through hole extending through the base from said obverse face to the reverse face.

Advantageously, the base is formed from a castable or settable material such as concrete, or other cement based material, and at least some of said channels or apertures are formed in the base during the moulding, casting or setting process. This is conveniently achieved by, for example, placing suitable spacer elements in a mould from which the base is cast.

In one embodiment, said at least one fixing device comprises a bolt, or similar fixing member, shaped and dimensioned to pass through said foot portion and through said base via a respective one of said first channels, and further includes means of fixing a free end of said bolt or other device which projects through the base in position. In particular, a nut or other anchoring or retaining device may be fitted to the free end of the bolt to engage with the reverse face of the base thereby retaining the bolt.

In alternative embodiments, said at least one fixing device comprises an expandable fixing device, e.g. an expandable bolt or plug, which is operable between a contracted state and an expanded state. In the contracted state, the fixing device is shaped and dimensioned to fit in to a respective first channel formed in the base and, in expanded state, the expandable fixing device engages with the base in a self retaining manner. In preferred embodiments, said expandable fixing device engages, in its expanded state, with the internal walls of said respective first channel. Alternatively, the expandable plug may engage with the reverse surface of the base.

Apparatus embodying one or more aspects of the invention may be used in relation to single animal stalls which may, for example comprise a single slab for use as the base, the slab being portable in nature; or may be used in an apparatus comprising a plurality of stall bases arranged end to end and/or side to side.

Further advantageous aspects of the invention will be apparent to those ordinarily skilled in the art upon review of the following description of specific embodiments and with reference to the accompanying drawings in which:
Figure 1a is a sectioned side view of an animal stall apparatus embodying the invention;
Figure 1b is an end view of the apparatus of Figure 1;
Figure 1c is a plan view of the apparatus of Figure 1a, shown without its barriers;
Figure 1d is an end view of the apparatus of Figure 1c;
Figure 2 is a side section view of a first arrangement for fixing a barrier to the base of an animal stall; and
Figure 3 is a side section view of an alternative arrangement for fixing a barrier to an animal stall.

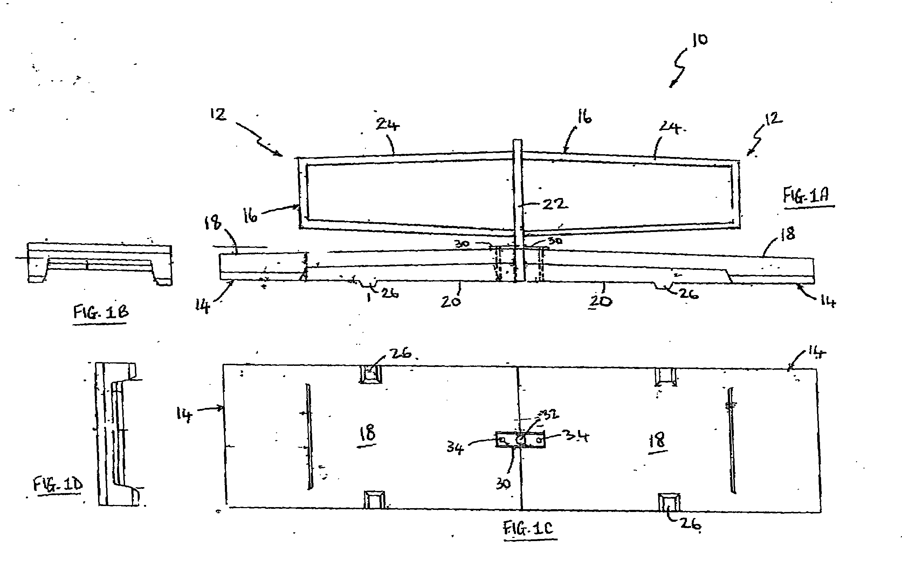

Referring now to the drawings, there is shown, generally indicated as 10, an animal stall apparatus comprising a plurality of animal stalls 12. In Figures 1a-1b, the apparatus 10 is shown as having two animal stalls 12 but it will be apparent that the apparatus 10 may alternatively comprise only one animal stall, or 3 or more animal stalls. In the present example, each stall 12 is assumed to be used for housing a cow, each e.g. when feeding, milking, or sleeping, and may therefore be referred to as a cow cubicle.

Each stall 12 comprises a base 14 and a barrier 16. Each base 14 has an obverse face 18 which, during use, is upwardly facing, and a reverse face 20 which, during use, faces downwardly. The barrier 16 comprises a support member or post 22 and one or more dividing portions 24. In use, the support post 22 is fixed to the base 14 and the dividing portion(s) 24 project from the support member 22. The dividers 24 project above the obverse face 18 of the base 14 in order to define the limits of the stall 12.

In the illustrated embodiment, the apparatus 10 comprises two stalls 12 arranged in a back-to-back orientation. Each stall 12 has a respective barrier 16 which shares a common support post 22.

Typically, a plurality of such apparatus 10 would be located side-by-side to define a plurality of animal stalls. It is to be understood that the barrier 16 may take a wide variety of shapes and configurations and may be associated with one or more support members, each support member having one or more leg portions for fixing to the base 14.

In the illustrated embodiment, each base 14 comprises a portable unit shaped and dimensioned to receive a single animal, typically a cow. The bases 16 are portable such that they may be lifted or transported by, for example, a fork lift truck. The base 4 is usually substantially rectangular in shape and is often referred to as a slab. The base 14 is advantageously formed from concrete but may alternatively be formed from any other suitable material, especially a mouldable or castable material, preferably cement-based. One end of the base 14 may be thicker than the other end to make the base substantially wedge shaped. This allows effluent, water and other liquids to run off the obverse face 18 of the base 14 during use. The reverse face 20 of the base 14 may be provided with feet 26. The preferred arrangement is such that, when the feet 26 are resting on the ground, gaps are defined between the feet to provide locations from which the base may be lifted.

It will be understood that the invention is not limited to use with a portable type base as illustrated in the drawings and may alternatively be used with animal stalls in which the base comprises the floor of a cattle shed or other building structure. In addition, in alternative embodiments, the base 4 may be dimensioned to receive more than one. Nor is the invention limited to use with animal stalls wherein two or more bases are provided back-to-back.

The apparatus 10 includes at least one foot portion 30 for connecting the barrier 16 to the base 14. In a preferred embodiment, a respective foot portion 30 is provided for each support member 22, or each leg portion of each support member 22. Alternatively, more than one leg portion or support member 22 may share a common foot portion.

In the illustrated embodiment, the foot portion 30 takes the form of a plate or a flange although in alternative embodiments it may take any other suitable form. Preferably, the foot portion 30 is arranged to engage with the obverse face 18 of the base 14 when the barrier 16 is fitted to the base 14. To this end, the foot portion 30 may project substantially perpendicularly from the support leg 22.

The foot portion 30 may be fixed to the support leg 22, or may be releasably fixable thereto. In the illustrated embodiment, however, the foot portion 30 and support leg 22 are coupled together during use or without necessarily being fixed directly to one another. For example, the foot portion 30 may be shaped to define an aperture or socket 32 for receiving the leg 22. In the illustrated embodiment, the foot portion 30 includes an aperture 32 through which the support leg 22 may pass. The aperture 32 preferably includes a collar (not shown) or other support means around all or part of its periphery in order to hold the support leg 22 when inserted it into the aperture 32.

The foot portion 30 also includes at least one aperture 34 for receiving a screw, bolt or other fixing device.

As can be seen in particular from Figures 1a and 1c, the illustrated embodiment shows a single foot portion 30 and a single leg 22 supporting two dividers 24, each divider 24 being associated with a respective one of the bases 14 located back-to-back. In this arrangement, the foot portion 30 may extend across the interface between the two bases 14 as shown. In an alternative arrangement, the foot portion 30 may be rotated through an approximately 90° with respect to the orientation shown in Figure 1c so that it extends substantially parallelly with the interface between the two bases 14. The foot portion 30 may be located on one of the bases, or the other, or may extend across both bases.

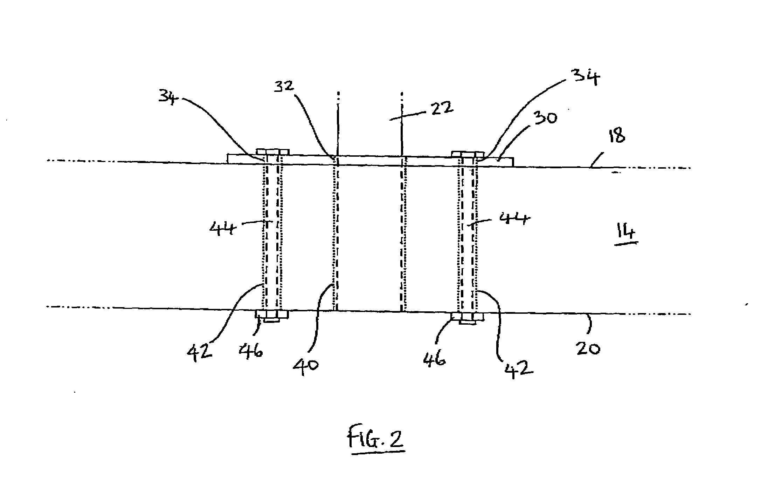

Referring now to Figure 2, a first arrangement for fixing a barrier 16 to a base 14 is described in more detail. The arrangements shown in Figure 2 are suitable for use with the apparatus 10 of Figure 1a-1c, or any other arrangement of one or more animal stalls.

The drawing shows a single base 14 formed form concrete or other suitable material. A first channel or aperture 40 is formed through the base 14 the ends of which opens onto the obverse and reverse face of the base 14 respectively. The aperture 40, or socket, may, as shown in Figure 1c, be formed at the interface between two separate bases, in which case a groove-like channel is formed in each base, the two channels, together forming a socket or aperture during use. In such cases, the two back-to-back bases 14 may be regarded as a single base.

At least one, and in the present case two, second channels or apertures 42 are formed through the base 14 form the obverse face to the reverse face. The arrangement is such that when the barrier 16 is mounted on the base 14, the apertures 34 of the foot portion 30 are substantially in register with a respective aperture 42, or socket, and the socket 32, when present, is substantially in register with the aperture 40. In an alternative embodiment where the support leg 22 is fixed to the plate 30, then aperture 40 is in register with the support leg 22.

When the barrier is 16 is mounted on the base 14, the support leg 22 extends into the aperture 40 and the foot portion 30 preferably rests against, or engages with the obverse face 18 of the base 14. A respective bolt, screw or other fixing device 44 is inserted through a respective aperture 34 and aperture 42. The bolts 44 are dimensioned to extend through the foot portion 30, through the base 14 and to project beyond the reverse face 20 of the base 14 whereupon they may be secured in place by a nut 46 or other anchoring device which typically engages with the reverse surface of the base 14.

All of the apertures or through holes 40, 42 formed through the base 14 are arranged such that the respective component, e.g. bolt 44 or leg 22, which passes through them in use may be easily removed. As a result, all of the components of the barrier 16 and the means for fixing the barrier to the base 14, can be completely removed from the base 14. Not only does this to facilitate the transport and storage of the apparatus 10, but it also allows any corroded components of the barrier or its fixings to be replaced without having to replace the base 14.

The apertures 40, 42 may be formed in any convenient manner, e.g. drilling. It is preferred however that the apertures 40,42 are preformed in the base at its time of creation. In this connection, the base 14 may be formed from a mouldable or castable material by a moulding or casting process as for example is used in the manufacture of concrete or other cement-based components. In order to create the through holes 40, 42, a suitably shaped and dimensioned spacer element (not shown) or bar may be included in the mould and the concrete or other castable material is poured around it. Then, when the material is partially set, the spacers or bars can be removed leaving behind the apertures 40, 42.

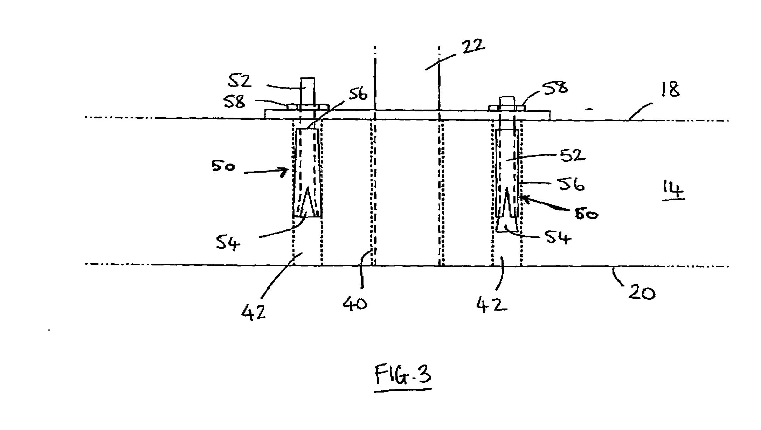

Referring now to Figure 3, an alternative arrangement for fixing the barrier 16 to the base 14 is described. The arrangement shown in Figure 3 is similar to the arrangement shown in Figure 2 and like numerals are used to indicate like parts. The arrangement shown in Figure 3 may be used in an apparatus as shown in Figures 1a-1c or in relation to any other animal stall apparatus.

In place of bolts 44, the arrangement of Figure 3 employs expandable bolts 50. Any suitable conventional expandable fixing device, e.g. a rawl plug or a rawl bolt, may be used for this purpose. The fixings 50 are operable between a contracted state and an expanded state. In Figure 3 the fixing 50 on the right hand side is shown in the contracted state while the fixing 50 on the left hand is shown in the expanded state. In use, the expandable fixings 50 may be inserted through the foot portion 30 and into a respective aperture 42 when in the contracted state and then operated into the expanded state. In the expanded state, the fixing 50 engages with the walls of the aperture 42 and so holds itself in place.

In many cases, expandable fixings, such as suitable bolts, cannot readily be returned to the contracted state once they have been expanded. With this in mind, it is preferred that the apertures 42 are through holes, i.e. they extend all the way through the base 14. This allows the user to push the fixings through the apertures and out of the reverse side of the base when it is desired to remove the barrier and its associated component from the base 14.

In the illustrated embodiment, the fixings 50 include a threaded bolt 52 with a wedge portion 54 at one end. An expandable sleeve 56 is located around the bolt 52. When the bolt 52 is tightened the wedge portion 54 is drawn into the sleeve 56 causing the sleeve to expand. Tightening the fixing may be achieved by rotating a nut 58 or similar device which is threaded or engages with the threading on the bolt 52.

In alternative embodiments, the leg 22 need not necessarily pass through the base 14 or even into the base 14, in which case the aperture 40 may be omitted. In such embodiments, the foot portion 30 may be provided at the end of the leg 22.

In further alternative embodiments (not illustrated) the fixings may take the form of any other suitable conventional fixing and need not necessarily be inserted through a pre-formed channel in the base. For example, a screw or similar fixing can be inserted through the foot portion and embedded in the base. In such cases, an aperture for the or each screw, or other fixing could be formed by, for example, drilling and the apertures/channels need not necessarily pass the whole way through he base. In such embodiments, it is advantageous that the or each leg portion 22 of the barrier extends into the base, especially via a pre-formed socket as described above.

The invention is not limited to the embodiment(s) described herein but can be amended or modified without departing from the scope of the present invention.

## Claims

1. An animal stall apparatus (10) comprising at least one stall base (14); at least one barrier (16), the barrier being detachably mountable on the base to project from an obverse surface (18) of the base; means for releasably fixing said at least one barrier to the base, wherein said fixing means includes at least one removable fixing device (44,50); at least one foot portion (30) extending, in use, across part of said obverse face and being adapted to receive or to engage with at least one of said at least one fixing devices; at least one first channel or aperture (42) being formed in said base and adapted to receive said at least one fixing device, wherein, when the barrier is mounted on the base, said at least one of said at least one fixing devices engages with said foot portion and is removably inserted into said at least one first channel to releasably couple said foot portion to the base, characterisied in that the barrier includes at least one leg portion (22), said foot portion (30) projecting from said at least one leg portion and wherein said base (14) includes a second channel or aperture (32) for receiving a free end of said at least one leg portion (22)..

2. An apparatus as claimed in any preceding claim, wherein said foot portion (30) comprises a collar or plate.

3. An apparatus as claimed in any preceding claim, wherein said foot portion (30) is adapted for engagement with said obverse face(18) when the barrier is mounted on the base.

4. An apparatus as claimed in any preceding claim, wherein said foot portion (30) is fixed to said leg portion (22).

5. An apparatus as claimed in any preceding claimclaim, wherein said foot portion (30) includes an aperture, or is otherwise adapted for enabling said leg portion to pass through said foot portion.

6. An apparatus as claimed in any preceding claim, wherein said foot portion (30) is spaced apart from the free end of said at least one leg portion (22).

7. An apparatus as claimed in any preceding claim, wherein said foot portion (30) includes at least one aperture (34) for receiving said at least one fixing device.

8. An apparatus as claimed in any preceding claim, wherein the or each first channel or aperture (42) formed in the base comprises a respective through hole extending through the base from said obverse face (18) to the reverse face (20).

9. An apparatus as claimed in any preceding claim, wherein said at least one fixing device comprises an elongate fixing member (44), shaped and dimensioned to pass through said foot portion and through said base via a respective one of said first channels, and further includes means (46) for fixing a free end of said elongate fixing member which projects through the base in position.

10. An apparatus as claimed in claim 9, wherein a free end of said fixing member (44) is adapted to receive an anchoring or retaining device (46) to engage with the reverse face (20) of the base thereby retaining the fixing device.

11. An apparatus as claimed in any of claims 1 to 8, wherein said at least one fixing device comprises an expandable fixing device (50) which is operable between a contracted state and an expanded state such that, in the contracted state, the fixing device (50) is shaped and dimensioned to fit into a respective first channel (42) formed in the base and, in expanded state, the expandable fixing device (50) engages with the base in a self retaining manner.

12. An apparatus as claimed in claim 11, wherein said expandable fixing device (50) engages, in its expanded state, with the internal walls of said respective first channel (42).

13. An apparatus as claimed in claim 12, wherein the expandable fixing device (50) engages with the reverse surface (20) of the base.

## Patentansprüche

1. Tierstallbuchtvorrichtung (10), umfassend mindestens einen Stallbuchtsockel (14); mindestens eine Absperrung (16), wobei die Absperrung abtrennbar an den Sockel anbaubar ist, um von einer Vorderseite (18) des Sockels vorzustehen; Mittel zum lösbaren Befestigen der genannten mindestens einen Absperrung an dem Sockel, wobei das genannte Befestigungsmittel mindestens eine abnehmbare Befestigungsvorrichtung (44, 50) umfasst; mindestens einen Fußabschnitt (30), der sich in Gebrauch über einen Teil der genannten Vorderseite erstreckt und dazu angepasst ist, mindestens eine der genannten mindestens einen Befestigungsvorrichtungen aufzunehmen oder damit in Eingriff zu treten; mindestens eine erste Rinne oder Öffnung (42), die in dem genannten Sockel gebildet ist und dazu angepasst ist, die genannte mindestens eine Befestigungsvorrichtung aufzunehmen, wobei, wenn die Absperrung an dem Sockel angebaut ist, die genannte mindestens eine der genannten mindestens einen Befestigungsvorrichtungen mit dem genannten Fußabschnitt in Eingriff tritt und abnehmbar in die genannte mindestens eine erste Rinne eingesetzt wird, um den genannten Fußabschnitt lösbar an den Sockel zu koppeln, **dadurch gekennzeichnet, dass** die Absperrung mindestens einen Beinabschnitt (22) umfasst, der genannte Fußabschnitt (30) von dem genannten mindestens einen Beinabschnitt vorsteht und wobei der genannte Sockel (14) eine zweite Rinne oder Öffnung (32) zum Aufnehmen eines freien Endes des genannten mindestens einen Beinabschnitts (22) umfasst.

2. Vorrichtung nach einem der vorangehenden Ansprüche, wobei der genannte Fußabschnitt (30) einen Bund oder eine Platte umfasst.

3. Vorrichtung nach einem der vorangehenden Ansprüche, wobei der genannte Fußabschnitt (30) für den Eingriff mit der genannten Vorderseite (18) angepasst ist, wenn die Absperrung an dem Sockel angebaut ist.

4. Vorrichtung nach einem der vorangehenden Ansprüche, wobei der genannte Fußabschnitt (30) an dem genanten Beinabschnitt (22) befestigt ist,

5. Vorrichtung nach einem der vorangehenden Ansprüche, wobei der genannte Fußabschnitt (30) eine Öffnung umfasst oder anderweitig dazu angepasst ist, zu ermöglichen, dass der genannte Beinabschnitt durch den genannten Fußabschnitt gelangt.

6. Vorrichtung nach einem der vorangehenden Ansprüche, wobei der genannte Fußabschnitt (30) von dem freien Ende des genannten mindestens einen Beinabschnitts (22) beabstandet ist.

7. Vorrichtung nach einem der vorangehenden Ansprüche, wobei der genannte Fußabschnitt (30) mindestens eine Öffnung (34) zum Aufnehmen der genannten mindestens einen Befestigungsvorrichtung umfasst.

8. Vorrichtung nach einem der vorangehenden Ansprüche, wobei die bzw. jede in dem Sockel gebildete erste Rinne oder Öffnung (42) ein jeweiliges Durchgangsloch umfasst, das sich von der genannten Vorderseite (18) zur Rückseite (20) durch den Sockel erstreckt.

9. Vorrichtung nach einem der vorangehenden Ansprüche, wobei die genannte mindestens eine Befestigungsvorrichtung ein längliches Befestigungselement (44) umfasst, das dazu geformt und dimensioniert ist, über eine jeweilige der genannten ersten Rinnen durch den genannten Fußabschnitt und durch den genannten Sockel zu gelangen, und weiter Mittel (46) zum Befestigen eines freien Endes des genannten länglichen Befestigungselements, das in Position durch den Sockel ragt, umfasst.

10. Vorrichtung nach Anspruch 9, wobei ein freies Ende des genannten Befestigungselements (44) dazu angepasst ist, eine Anker- oder Sicherungsvorrichtung (46) aufzunehmen, um mit der Rückseite (20) des Sockels in Eingriff zu treten und **dadurch** die Befestigungsvorrichtung zu sichern.

11. Vorrichtung nach einem der Ansprüche 1 bis 8, wobei die genannte mindestens eine Befestigungsvorrichtung eine ausdehnbare Befestigungsvorrichtung (50) umfasst, die zwischen einem zusammengezogenen Zustand und einem ausgedehnten Zustand betätigbar ist, so dass im zusammengezogenen Zustand die Befestigungsvorrichtung (50) dazu geformt und dimensioniert ist, in eine jeweilige in dem Sockel gebildete erste Rinne (42) zu passen und im ausgedehnten Zustand die ausdehnbare Befestigungsvorrichtung (50) auf selbstsichernde Weise mit dem Sockel in Eingriff tritt.

12. Vorrichtung nach Anspruch 11, wobei die genannte ausdehnbare Befestigungsvorrichtung (50) in ihrem ausgedehnten Zustand mit den Innenwänden der genannten jeweiligen ersten Rinne (42) in Eingriff tritt.

13. Vorrichtung nach Anspruch 12, wobei die ausdehnbare Befestigungsvorrichtung (50) mit der Rückseite (20) des Sockels in Eingriff tritt.

## Revendications

1. Appareil de type stalle pour animaux (10) comportant au moins une base de stalle (14) ; au moins une clôture (16), la clôture étant en mesure d'être montée de manière détachable sur la base à des fins de saillie depuis une face de dessus (18) de la base ; un moyen permettant de fixer de manière libérable ladite au moins une clôture sur la base, dans lequel ledit moyen de fixation comprend au moins un dispositif de fixation amovible (44, 50) ; au moins une partie pied (30) s'étendant, lors de l'utilisation, en travers d'une partie de ladite face de dessus et étant adaptée à des fins de réception ou de mise en prise avec au moins l'un desdits, au moins un, dispositifs de fixation ; au moins un premier profilé ou ouverture (42) étant formé dans ladite base et adapté à des fins de réception dudit au moins un dispositif de fixation, dans lequel, quand la clôture est montée sur la base, ledit au moins un desdits, au moins un, dispositifs de fIxation entre en prise avec ladite partie pied et est insérée de manière amovible dans ledit au moins un premier profilé à des fins d'accouplement libérable de ladite partie pied à la base, **caractérisé en ce que** la clôture comprend au moins une partie jambe (22), ladite partie pied (30) faisant saillie depuis ladite au moins une partie jambe et dans lequel ladite base (14) comprend un second profilé ou ouverture (32) à des fins de réception d'une extrémité libre de ladite au moins une partiejambe (22).

2. Appareil selon l'une quelconque des revendications précédentes, dans lequel ladite partie pied (30) comporte un collier ou une plaque,

3. Appareil selon l'une quelconque des revendications précédentes, dans lequel ladite partie pied (30) est adaptée à des fins de mise en prise avec ladite face de dessus (18) quand la clôture est montée sur la base.

4. Appareil selon l'une quelconque des revendications précédentes, dans lequel ladite partie pied (30) est fixée sur ladite partie jambe (22).

5. Appareil selon l'une quelconque des revendications précédentes, dans lequel ladite partie pied (30) comprend une ouverture, ou est autrement adaptée pour permettre à ladite partie jambe de passer au travers de ladite partie pied.

6. Appareil selon l'une quelconque des revendications précédentes, dans lequel ladite partie pied (30) est espacée par rapport à l'extrémité libre de ladite au moins une partie jambe (22).

7. Appareil selon l'une quelconque des revendications précédentes, dans lequel ladite partie pied (30) comprend au moins une ouverture (34) à des fins de réception dudit au moins un dispositif de fixation.

8. Appareil selon l'une quelconque des revendications précédentes, dans lequel le ou chaque premier profilé ou ouverture (42) formé dans la base comporte un trou traversant respectif s'étendant au travers de la base depuis la face de dessus (18) jusqu'à la face de dessous (20).

9. Appareil selon l'une quelconque des revendications précédentes, dans lequel ledit au moins un dispositif de fixation comporte un élément de fixation allongé (44), dont la forme et les dimensions lui permettent de passer au travers de ladite partie pied et au travers de ladite base par le biais de l'un respectif desdits premiers profilés, et comprend par ailleurs un moyen (46) permettant de fixer une extrémité libre dudit élément de fixation allongé qui fait saillie au travers de la base en place.

10. Appareil selon la revendication 9, dans lequel une extrémité libre dudit élément de fixation (44) est adaptée à des fins de réception d'un dispositif d'ancrage ou de retenue (46) pour une mise en prise avec la face de dessous (20) de la base pour de ce fait retenir le dispositif de fixation.

11. Appareil selon l'une quelconque des revendications 1 à 8, dans lequel ledit au moins un dispositif de fixation comporte un dispositif de fixation en mesure de se déployer (50) qui est utilisable entre un état contracté et un état déployé de sorte que, dans l'état contracté, le dispositif de fixation (50) est formé et dimensionné pour s'ajuster dans un premier profilé respectif (42) formé dans la base et, dans l'état déployé, le dispositif de fixation en mesure de se déployer (50) entre en prise avec la base par autoretenue.

12. Appareil selon la revendication 11, dans lequel ledit dispositif de fixation en mesure de se déployer (50) entre en prise, dans son état déployé, avec les parois internes dudit premier profilé respectif(42).

13. Appareil selon la revendication 12, dans lequel le dispositif de fixation en mesure de se déployer (50) entre en prise avec la face de dessous (20) de la base.
